# FASCICULE DE BREVET EUROPEEN

(11) **EP 2 707 921 B1**
(45) Date de publication et mention de la délivrance du brevet: **01.07.2015**
(21) Numéro de dépôt: 12718211.1
(22) Date de dépôt: 02.05.2012
(51) Int. Cl.: H01M 8/04, H01M 8/24, H01M 8/10

(54) **PILE A COMBUSTIBLE A INJECTION MULTIPLE ET PROCEDE DE FONCTIONNEMENT**
BRENNSTOFFZELLE MIT MULTIPLER EINSPEISUNG UND VEFAHREN HIERFÜR
MULTIPLE INJECTION FUEL CELL AND OPERATING METHOD THEREOF

(30) Priorité: 09.05.2011 FR 1153955
(43) Date de publication de la demande: 19.03.2014
(73) Titulaire: Commissariat à l'Énergie Atomique et aux Énergies Alternatives, 75015 Paris (FR)
(72) Inventeur: POIROT-CROUVEZIER, Jean-Philippe, F-38450 St Georges De Commiers (FR)
(74) Mandataire: Guérin, Michel
(86) Numéro de dépôt international: PCT/EP2012/058012
(87) Numéro de publication internationale: WO 2012/152623

(56) Documents cités:
- EP-A1- 0 596 366
- EP-A2- 1 587 157
- JP-A- 62 150 664
- US-A1- 2005 164 069
- US-A1- 2008 026 264

## Description

L'invention concerne les piles à combustible, et en particulier les piles à hydrogène.

Une pile à combustible est un empilement de cellules élémentaires dans lesquelles a lieu une réaction électrochimique entre des produits réactifs qui sont introduits au fur et à mesure que la réaction consomme ces produits. Le combustible, qui est de l'hydrogène dans le cas d'une pile à hydrogène, est apporté au contact de l'anode ; le comburant, de l'oxygène ou de l'air pour une pile à hydrogène, est apporté au contact de la cathode. L'anode et la cathode sont séparées par un électrolyte qui peut être une membrane solide, perméable à certains des constituants de la réaction mais pas à tous. La réaction est subdivisée en deux demi-réactions (une oxydation et une réduction), qui ont lieu d'une part à l'interface anode / électrolyte et d'autre part à l'interface cathode / électrolyte. En pratique, l'électrolyte solide est une membrane perméable aux ions hydrogène H⁺ mais pas au di-hydrogène moléculaire H₂ ni aux électrons. La réaction de réduction à l'anode est une oxydation de l'hydrogène produisant des ions H⁺ qui traversent la membrane et des électrons qui sont collectés par l'anode ; à la cathode, ces ions viennent participer à la réduction de l'oxygène, nécessitant des électrons et produisant de l'eau, avec dégagement de chaleur.

L'empilement de cellules n'est que le lieu de la réaction : les réactifs doivent y être apportés, les produits et les espèces non réactives doivent en être évacuées, tout comme la chaleur produite. Enfin, les cellules sont reliées en série les unes aux autres, l'anode d'une cellule étant reliée à la cathode de la cellule adjacente ; aux extrémités de l'empilement de cellules se trouvent d'un côté une anode reliée à une borne négative pour évacuer les électrons et d'un autre côté une cathode reliée à une borne positive. Un circuit extérieur est relié à ces bornes. Les électrons circulent de l'anode à la cathode par le circuit extérieur ainsi alimenté par la pile au fur et à mesure de la réaction électrochimique.

Une pile à combustible peut être divisée en plusieurs empilements ayant chacun des bornes électriques et des interfaces d'alimentation en fluides réactifs et de refroidissement ; ces sous-ensembles sont alors connectés en parallèle ou en série d'un point de vue fluidique et d'un point de vue électrique. Pour la partie fluidique la connexion en parallèle est de loin celle qui est rencontrée le plus fréquemment.

Dans les systèmes utilisant de l'hydrogène et de l'air atmosphérique comme réactifs, de l'air comprimé est amené à la pile et traverse une série de composants (filtre, échangeur thermique, humidificateur, etc.) avant de pénétrer dans la pile du côté de la cathode. En sortie de cathode l'air est généralement asséché pour récupérer l'eau nécessaire à l'humidification, puis le plus souvent évacué par l'intermédiaire d'un déverseur (c'est-à-dire un régulateur de pression amont) permettant le maintien en pression de la ligne. Côté anode l'hydrogène peut être issu d'un grand nombre de sources différentes, par exemple un réservoir sous pression permettant d'éviter le recours à un dispositif de compression du gaz. Il est donc le plus souvent amené à la pile après avoir traversé un simple détendeur ou une électrovanne appliquant la pression prévue dans la ligne. La plupart de ces sources possibles fournissent un hydrogène sec.

En sortie de pile, plusieurs scénarios sont possibles : l'hydrogène injecté dans la pile et non consommé par la réaction peut être en partie réinjecté en entrée de pile conjointement à de l'hydrogène sec issu de la source, de manière à homogénéiser le mélange dans la pile, c'est-à-dire de manière à le brasser avec les produits de réaction et les espèces non réactives présentes (azote notamment, provenant de la cathode par perméation au travers de la membrane) qui ne participent pas à la réaction et qui au contraire tendent à l'inhiber ; cette recirculation permet de plus de maintenir une certaine humidification de l'hydrogène qui parvient aux cellules ; en effet, dans les produits de réaction, il y a de la vapeur d'eau mélangée à l'hydrogène non consommé et cette vapeur d'eau est recirculée avec l'hydrogène ; une humidification est souhaitable pour rendre l'hydrogène moins agressif vis-à-vis de la membrane électrolytique. Cependant les systèmes de recirculation qui permettent cette réinjection sont complexes et coûteux.

Alternativement, on se contente de purger les cellules à intervalles réguliers afin d'évacuer les produits de la réaction et notamment l'azote. Mais on ne peut pas attendre pour purger qu'il y ait trop d'azote dans les cellules car la réaction électrochimique s'arrêterait. La purge des produits devenus gênants ne peut pas se faire sans purger en même temps une certaine quantité d'hydrogène ; c'est une perte dommageable en raison du coût de l'hydrogène, et il est souhaitable de minimiser la quantité d'hydrogène ainsi purgée.

Un des buts de l'invention est de proposer un système qui réduit les pertes de produit réactif (hydrogène notamment) lors des purges, sans pour autant nécessiter un système complexe de recirculation.

Selon l'invention on propose une pile à combustible produisant de l'énergie électrique par une réaction électrochimique entre au moins deux produits réactifs, la pile comprenant au moins un empilement de cellules composées chacune d'un assemblage d'un électrolyte, d'une anode, et d'une cathode, l'empilement étant pourvu d'un moyen d'approvisionnement pour au moins un des produits réactifs, apte à amener ce produit réactif dans les cellules de l'empilement, et d'un moyen d'évacuation des sous-produits de la réaction, caractérisé en ce que :
- les cellules de la pile sont réparties en N groupes, N entier >1, et le moyen d'approvisionnement du produit réactif comporte un collecteur d'alimentation respectif d'approvisionnement pour chaque groupe de cellules, ce collecteur étant apte à amener le produit réactif sélectivement aux cellules d'un groupe sans l'amener aux cellules des autres groupes,
- le moyen d'approvisionnement comporte un moyen de commutation sélectif pour autoriser et interdire le passage du produit réactif vers chacun des collecteurs,
- le moyen d'évacuation comporte un ou plusieurs collecteurs d'évacuation, il est agencé de manière à autoriser la circulation entre les N groupes de cellules du produit réactif non consommé par la réaction, et il comporte une vanne de purge.

Les cellules des différents groupes sont de préférence empilées de manière imbriquée, c'est-à-dire qu'une cellule d'un groupe est adjacente à une cellule d'un autre groupe dans un même empilement. On peut envisager aussi, mais cette configuration serait moins intéressante car moins compacte, que la pile est formée de plusieurs empilements correspondant chacun à un groupe respectif de cellules.

Le collecteur d'évacuation, traversant l'empilement de cellules est de préférence commun, c'est-à-dire que les cellules de tous les groupes communiquent directement avec ce collecteur ; mais on pourrait aussi avoir des collecteurs séparés pour chaque groupe ; ils seraient alors reliés à la sortie de l'empilement pour assurer une circulation libre d'un groupe à l'autre.

Le moyen d'approvisionnement peut apporter de l'hydrogène aux collecteurs d'alimentation des N groupes, le collecteur d'un groupe communiquant avec les cellules de ce groupe du côté de l'anode. Mais on peut prévoir aussi que le moyen d'approvisionnement apporte de l'oxygène aux collecteurs d'alimentation des N groupes, le collecteur d'un groupe communiquant avec les cellules de ce groupe du côté de la cathode.

L'invention propose corrélativement un procédé de fonctionnement d'une pile à combustible, qui peut être mis en oeuvre avec une telle structure de pile.

Le procédé est un procédé d'alimentation d'un empilement de cellules d'une pile à combustible par au moins un produit réactif, qui est caractérisé en ce que l'on alimente sélectivement N groupes de cellules de l'empilement avec le produit réactif selon au moins trois phases,
- une première phase dans laquelle un premier groupe de cellules est alimenté mais pas un deuxième groupe, le produit réactif non consommé pouvant cependant circuler entre les deux groupes par l'intermédiaire d'au moins un collecteur d'évacuation relié aux cellules des deux groupes ;
- une deuxième phase dans laquelle le deuxième groupe est alimenté mais pas le premier, le produit réactif non consommé pouvant cependant circuler entre les deux groupes par l'intermédiaire du collecteur d'évacuation ;
- une troisième phase, de purge, dans laquelle les deux groupes sont d'abord alimentés simultanément, puis une vanne de purge du collecteur d'évacuation est ouverte puis refermée.

Les deux premières phases sont de préférence répétées sur plusieurs alternances successives avant de passer à la troisième phase, après quoi un cycle recommence.

Si le nombre N est supérieur à deux, le principe est le même, mais un troisième groupe, un quatrième groupe, etc. sont prévus dans la pile, et des phases complémentaires sont insérées dans le processus. On alimente soit un seul groupe pendant une phase soit plusieurs groupes (mais pas tous), en modifiant la composition des groupes alimentés à chaque phase dans une série de phases successives avec une permutation progressive des alimentations. Puis on effectue une phase de purge qui comporte une ouverture simultanée de toutes les alimentations suivie immédiatement d'une purge commune (ouverture puis refermeture de la vanne de purge).

Du fait de la possibilité de circulation du produit réactif non consommé d'un groupe de cellules à un autre par l'intermédiaire du ou des collecteurs d'évacuation, on peut réduire la consommation d'hydrogène en purgeant moins souvent la pile ; en effet, on alimente simultanément certains groupes de cellules mais pas tous, la réaction se poursuivant dans le ou les groupes non alimentés directement ; le risque de saturation en produits de réaction, qui tendrait à arrêter la réaction électrochimique par manque local de produit réactif, est réduit par le brassage de produits de réaction provoqué par les changements d'alimentation successifs, et par le fait que le produit réactif non consommé d'un groupe alimenté parvient par le collecteur d'évacuation au(x) groupe(s) non alimenté(s) et se mélange avec les produits de réaction, permettant à la réaction de se poursuivre. Par exemple, dans une pile à hydrogène utilisant de l'air comme comburant et générant de l'azote à l'anode par perméation au travers de la membrane, les cellules dont l'alimentation principale en hydrogène est coupée risquent une saturation en azote, mais l'hydrogène non consommé par un groupe de cellules (alimentées) parvient à l'autre groupe (non alimenté) par l'intermédiaire du ou des collecteurs d'évacuation des deux groupes. Un brassage de l'azote résultant de la réaction dans les cellules du groupe non alimenté se produit du fait du changement d'alimentation, et ce brassage est facilité par la connexion ouverte entre les sorties des deux groupes. Même si ce brassage n'apporte qu'un faible pourcentage d'hydrogène aux zones saturées d'azote, le brassage et le faible pourcentage suffisent à entretenir une réaction correcte.

De plus, l'hydrogène ainsi récupéré est chargé d'humidité et introduit cette humidité dans le groupe non alimenté de sorte que lorsqu'on alimente à nouveau ce groupe les membranes électrolytiques restent en présence d'un mélange d'hydrogène humide et d'hydrogène sec. Cette humidité est favorable à la durée de vie des membranes.

D'autres caractéristiques et avantages de l'invention apparaîtront à la lecture de la description détaillée qui suit et qui est faite en référence aux dessins annexés dans lesquels :
- la figure 1 représente schématiquement l'architecture de principe d'une pile à combustible selon l'invention ;
- la figure 2 représente les trois phases de fonctionnement de la pile dans une mise en oeuvre du procédé selon l'invention ;
- la figure 3 représente un empilement de cellules appartenant à deux groupes pouvant être alimentés séparément, dans lequel les groupes de cellules sont imbriqués, deux cellules adjacentes appartenant à deux groupes différents ;
- la figure 4 représente une vue schématique des plaques bipolaires, dans trois plans différents des plaques de cellules empilées : le plan des cellules du côté de la cathode, le plan d'une cellule d'un premier groupe du côté de l'anode, et le plan d'une cellule d'un deuxième groupe du côté de l'anode.

On décrira l'invention à propos d'une pile à hydrogène alimentée du côté de l'anode par de l'hydrogène et du côté de la cathode par de l'air, la mise en oeuvre du procédé étant appliquée ici à propos de l'hydrogène, c'est-à-dire du côté des anodes. L'invention est applicable également du côté de la cathode, c'est-dire pour l'alimentation en comburant, lorsque celui-ci est constitué en majeure partie d'oxygène (teneur supérieure à 50% dans le gaz sec). Enfin, elle est principalement applicable aux piles à hydrogène mais elle est applicable aussi pour d'autres produits réactifs, et ceci aussi bien du côté de l'alimentation en comburant que du côté de l'alimentation en combustible.

La pile à hydrogène comprend de multiples cellules comprenant chacune une anode, une cathode, et un électrolyte entre les deux. On considérera ici seulement le cas où l'électrolyte est constitué par une membrane échangeuse d'ions. En pratique de nombreuses cellules sont empilées pour former un ou plusieurs empilements reliés entre eux d'un point de vue fluidique et électrique.

Un moyen d'approvisionnement des cellules en hydrogène sous pression est prévu. Il comprend des moyens de distribution d'hydrogène à l'intérieur de chaque cellule du côté de l'anode. De même un moyen d'approvisionnement en air est prévu, avec des moyens de distribution d'air dans chaque cellule du côté de la cathode. De même encore, un moyen d'évacuation des produits de la réaction (azote, eau et notamment eau liquide) est prévu, ce moyen étant distribué de manière à recueillir et évacuer les produits de réaction de toutes les cellules. On s'intéressera ici seulement à l'évacuation des produits de réaction et des espèces inertes du côté de l'anode, en particulier de l'eau et de l'azote qui apparaissent initialement du côté de la cathode mais qui sont passés du côté de l'anode à travers la membrane électrolytique. Enfin, un moyen de refroidissement distribué sur toutes les cellules peut également être prévu pour des piles à combustibles qui nécessitent un tel refroidissement.

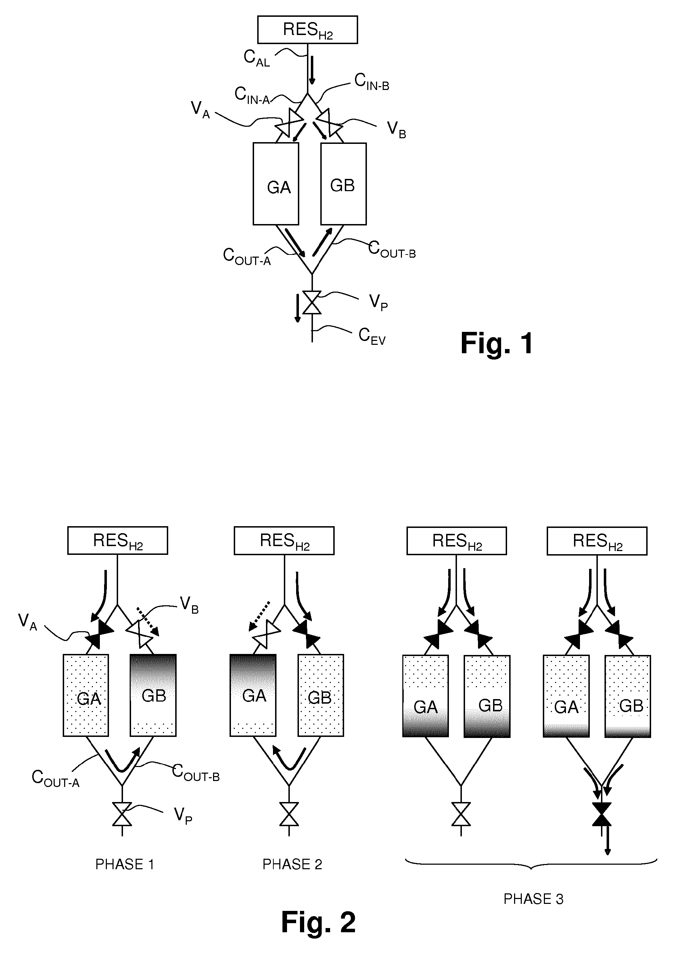

Sur la figure 1, on a représenté très schématiquement deux groupes de cellules : groupe GA et groupe GB, avec une partie amont (en amont de l'empilement de cellules) du moyen d'approvisionnement en hydrogène, et la partie aval (en aval de l'empilement de cellules) du moyen d'évacuation. Les autres éléments décrits ci-dessus ne sont pas représentés.

Les deux groupes de cellules sont identiques mais sont alimentés séparément. La partie amont du moyen d'approvisionnement comprend donc
- un réservoir RES_{H2} d'hydrogène sous pression (ou tout autre moyen d'amenée d'hydrogène sous pression) ;
- un conduit principal C_{AL} d'alimentation générale de la pile, qui amène l'hydrogène du réservoir ;
- deux conduits secondaires d'entrée C_{IN-A} et C_{IN-B} qui amènent l'hydrogène du conduit général C_{AL} vers chacun des deux groupes de cellules ; la pile comporte, en aval de ces conduits secondaires, un collecteur d'alimentation respectif pour chaque groupe ; ce collecteur traverse l'empilement de cellules et distribue l'hydrogène dans les cellules ; il n'est pas représenté sur la figure 1 ;
- des vannes de commutation sur le trajet de l'hydrogène à partir du conduit général pour aiguiller l'hydrogène soit vers le collecteur d'alimentation du groupe GA soit vers le collecteur d'alimentation du groupe GB soit vers les deux à la fois ; on a représenté deux vannes V_{A} et V_{B} séparées, placées chacune dans un conduit secondaire respectif, mais il faut comprendre qu'on pourrait avoir une seule vanne à trois positions placée à la jonction entre le conduit principal et les conduits secondaires ;

On a représenté sur la figure 1, pour faciliter la compréhension, les deux groupes de cellules l'un à côté de l'autre ; en réalité les cellules sont toutes empilées et les groupes de cellules seront imbriqués l'un dans l'autre dans l'empilement : l'empilement comprendra une alternance régulière de cellules du groupe A et de cellules du groupe B, de préférence une cellule d'un groupe toujours adjacente à une cellule de l'autre groupe.

Pour l'évacuation des produits de la réaction du côté de l'anode, on a un ou deux collecteurs d'évacuation non représentés qui traversent l'empilement de cellules et qui recueillent de chaque cellule les produits engendrés par la réaction à l'anode. En aval de ce collecteur, le moyen d'évacuation peut comprendre un ou deux conduits de sortie C_{OUT-A} et C_{OUT-B} (selon qu'il y a un ou deux collecteurs d'évacuation) qui rejoignent un conduit principal d'évacuation C_{EV}. Une vanne de purge V_{P} est prévue dans le conduit principal C_{EV}. Elle sert à purger l'azote et l'eau en provenance des deux groupes de cellules à la fois, c'est-à-dire qu'elle ne purge pas séparément chacun des groupes.

Pour simplifier la représentation et les explications, on a considéré sur la figure 1 qu'il y a des collecteurs séparés pour les cellules des deux groupes mais dans la pratique il y a de préférence un seul collecteur relié à toutes les cellules des deux groupes imbriqués.

La figure 2 représente les phases principales de fonctionnement de la pile, avec la même représentation très simplifiée qu'à la figure 1.

Dans une première phase, la vanne VA est ouverte, la vanne V_{B} est fermée, la vanne V_{P} est fermée ; le groupe GA de cellules est alimenté en hydrogène sec sous pression par la vanne VA ; la pression pousse vers le conduit de sortie C_{OUT-A} les produits de réaction, azote, eau liquide et vapeur d'eau, mais aussi de l'hydrogène non consommé par la réaction produite avant l'ouverture de la vanne VA. Cet hydrogène (humide) parvient dans le groupe GB par le conduit C_{OUT-B} qui communique librement avec le conduit C_{OUT-A} (ou directement par le collecteur d'évacuation commun aux deux groupes s'il existe) ; l'hydrogène humide se mélange aux produits de la réaction qui continue à se produire dans le groupe GB non alimenté en hydrogène sec. Ce brassage avec un apport d'hydrogène évite une saturation locale de la zone de réaction par une trop grande concentration d'azote ; la réaction électrochimique peut donc se poursuivre pendant cette phase malgré l'absence d'alimentation en hydrogène sec.

Dans la deuxième phase, la situation est tout simplement inversée, la vanne VA est fermée et la vanne V_{B} est ouverte. La vanne V_{P} reste fermée. Le flux de produits de réaction et d'hydrogène non consommé s'inverse et passe du conduit C_{OUT-B} vers le conduit C_{OUT-A}.

Ces deux phases peuvent être suivies d'une troisième phase, ou bien être alternées X fois avant d'effectuer une troisième phase. Pendant cette alternance, le volume d'azote accumulé est déplacé d'un groupe de cellules à l'autre en passant par les conduits de sortie ou par le collecteur d'évacuation commun. Ce brassage permet de limiter le phénomène de stratification d'azote, ou accumulation locale d'azote produit en continu mais non évacué tant que la vanne de purge n'est pas ouverte. En l'absence de ce brassage il faudrait purger souvent ; avec ce brassage on peut purger moins souvent.

La troisième phase est donc une phase de purge pour évacuer simultanément les produits de réaction et notamment l'azote hors des deux groupes de cellules. Les vannes d'admission V_{A} et V_{B} sont ouvertes ensemble, puis la vanne de purge V_{P} est également ouverte puis refermée.

La fréquence d'apparition de la phase de purge (X fois plus faible que la fréquence des alternances d'alimentation des groupes GA et GB) peut être :
- une fréquence fixe prédéfinie ;
- une fréquence déterminée par rapport à la fréquence de l'alternance des deux premières phases (qui elle-même peut être fixe ou variable) ;
- une fréquence variant en fonction des paramètres de fonctionnement de la pile, par exemple le courant délivré ou la température,
- une fréquence variant en fonction d'un seuil de niveau de tension délivrée, ce seuil pouvant lui-même varier en fonction de paramètres de fonctionnement de la pile.

La fréquence de l'alternance des deux premières phases peut être déterminée soit expérimentalement soit in situ par une détection de paramètres tels que la tension de sortie aux bornes des cellules : une chute de tension indique un ralentissement de la réaction donc l'utilité de basculer alors l'alimentation des groupes si cette chute dépasse un seuil tolérable (par exemple quelques dizaines de millivolts).

Le même principe peut être appliqué à plus de deux groupes de cellules alimentées séparément en hydrogène et ayant leurs sorties d'évacuation communiquant entre elles.

Par exemple, on peut avoir trois groupes et une permutation circulaire de leur alimentation en trois phases pouvant être répétées X fois puis une quatrième phase de purge commune :
- phase 1 : un groupe GA alimenté, deux groupes GB et GC non alimentés ;
- phase 2 : un groupe GB alimenté, deux groupes GC et GA non alimentés ;
- phase 3 : un groupe GC alimenté, deux groupes GA et GB non alimentés ;
- phase 4 après X séries de trois permutations : Groupes GA, GB, GC alimentés, puis ouverture puis refermeture de la vanne de purge.

On peut également prévoir que deux groupes soient alimentés simultanément, un seul étant non alimenté.

Si le nombre N de groupes augmente au-delà de trois, bien d'autres combinaisons sont possibles. Par exemple, avec quatre groupes GA, GB, GC, GD, ayant des sorties reliées avec une valve de purge commune, on peut faire une permutation circulaire à quatre phases dans laquelle deux groupes sont alimentés simultanément et deux autres ne sont pas alimentés :
- phase 1 : deux groupes GA, GB alimentés, deux groupes GC, GD non alimentés ;
- phase 2 : deux groupes GB, GC alimentés, deux groupes GD, GA non alimentés ;
- phase 3 : deux groupes GC, GD alimentés, deux groupes GA et GB non alimentés ;
- phase 4 : deux groupes GD, GA alimentés, deux groupes GB, GC non alimentés ;
- phase 5 après X séries de quatre permutations : Groupes GA, GB, GC,GD alimentés, puis ouverture puis refermeture de la vanne de purge.

Un meilleur brassage de l'azote est ainsi assuré, l'azote étant transféré plus fréquemment d'un groupe de cellules à un autre.

Les étapes de procédé ainsi décrites sont particulièrement intéressantes lorsque la pile à hydrogène fonctionne avec de l'air comme comburant puisqu'elles permettent d'éviter des inconvénients dus à l'azote. Mais même si le comburant ne contient pas d'azote, le brassage qui résulte de ce procédé est intéressant pour limiter l'assèchement de la membrane à l'entrée de la pile à combustible du côté de l'anode.

Pour mettre en oeuvre l'invention, on part de la disposition classique de cellules empilées, mais on adapte cette disposition pour y inclure des moyens de distribution capables de distribuer le produit réactif, par exemple l'hydrogène, dans certaines cellules mais pas dans d'autres.

Les piles à combustible à cellules empilées classiques comprennent une superposition de plaques dites plaques bipolaires entre lesquelles sont disposés des ensembles comprenant à la fois une membrane électrolytique et une électrode de chaque côté de la membrane. Les plaques bipolaires, éventuellement associées à des joints d'étanchéité de configuration particulière, servent à collecter le courant électrique et à distribuer les gaz réactifs (hydrogène et air, ou hydrogène et oxygène) à la membrane, du côté approprié de la membrane : hydrogène du côté anode, air ou oxygène du côté cathode. Elles comprennent des canaux de distribution en regard des anodes et d'autres en regard des cathodes. Sur leur périphérie, les plaques sont percées d'ouvertures servant à amener les gaz réactifs, et d'ouvertures servant à évacuer les produits de la réaction. Les ouvertures d'admission de gaz réactif forment, par la superposition des plaques en contact étroit les unes avec les autres, des collecteurs d'alimentation en gaz réactif. Les ouvertures d'évacuation forment de la même manière des collecteurs d'évacuation des produits de la réaction. Des joints d'étanchéité sont prévus pour que les fluides restent confinés dans ces collecteurs, mais la conformation des plaques bipolaires et/ou des joints d'étanchéité est telle que des passages sont formés dans les collecteurs aux endroits où on veut distribuer le fluide dans une cellule pour que le fluide pénètre dans cette cellule, du côté désiré sans aller vers l'autre côté. Ces passages aiguillent les gaz réactifs vers la cellule par l'intermédiaire de canaux de distribution formés dans les plaques, qui distribuent le gaz aussi uniformément que possible vers la membrane électrolytique.

Il en est de même pour les produits de réaction, les plaques et joints étant conformés pour permettre de recueillir et évacuer les produits de réaction du côté de l'anode et/ou de la cathode vers le collecteur d'évacuation.

Ainsi, le collecteur d'alimentation en hydrogène d'une cellule classique est constitué par l'empilement de plaques et joints conformés de telle manière que l'hydrogène puisse se répandre dans les cellules du côté de l'anode mais absolument pas du côté de la cathode. C'est le contraire pour le collecteur d'alimentation en air ou oxygène.

En bout d'empilement ces ouvertures formées dans les plaques sont reliées respectivement à un conduit d'alimentation respectif pour chaque produit réactif et à un conduit d'évacuation pour les produits de la réaction.

Selon l'invention, on modifie cette structure en prévoyant que les plaques sont perçées de N collecteurs d'alimentation (N entier au moins égal à 2) pour le produit réactif pour lequel on veut mettre en oeuvre l'invention, ici N collecteurs d'alimentation d'hydrogène. Par conséquent, au lieu de conformer les plaques et joints avec des ouvertures empilées de manière que l'hydrogène puisse pénétrer du collecteur d'alimentation vers le côté anode de toutes les cellules de l'empilement, on prévoit :
- que les plaques et joints comportent chacune N séries d'ouvertures empilées (N>1) au lieu d'une seule série, pour former N collecteurs d'alimentation au lieu d'un, chaque collecteur alimentant un groupe de cellules respectif ;
- que les plaques et joints de l'empilement ont N conformations différentes en ce qui concerne les passages permettant de faire passer un gaz entre un collecteur d'une série et une cellule, de manière que les ouvertures empilées d'une série alimentent les cellules du groupe correspondant mais pas les cellules des autres groupes.

Les cellules sont de préférence alternées régulièrement, c'est-à-dire que deux cellules adjacentes appartiennent à des groupes différents.

On distingue donc les groupes par le fait qu'une cellule appartenant à un groupe est en communication avec le collecteur d'alimentation de ce groupe mais pas en communication avec les autres collecteurs d'évacuation qui la traversent.

En bout d'empilement, les ouvertures formant un collecteur d'alimentation respectif en hydrogène sont reliées aux conduits respectifs d'alimentation (C_{IN-A}, C_{IN-B}). Il y a N collecteurs d'alimentation reliés respectivement à l'un de N conduits. Et il y a des vannes telles que VA, V_{B} pour autoriser ou non l'injection d'hydrogène dans un conduit respectif donc dans une série d'ouvertures respective formant un collecteur d'alimentation.

En ce qui concerne les ouvertures correspondant au collecteur d'évacuation (on s'intéressera seulement au collecteur des produits de réaction à l'anode mais il peut y avoir un collecteur pour la cathode aussi), on peut envisager deux possibilités :
- ou bien il y a un seul collecteur d'évacuation formé par des ouvertures dans les plaques bipolaires superposées, ce collecteur communiquant avec toutes les cellules quel que soit le groupe auxquelles les cellules appartiennent ; les cellules peuvent alors communiquer directement entre elles par l'intermédiaire du collecteur d'évacuation ;
- ou bien il y a plusieurs collecteurs d'évacuation (pas forcément N) configurés comme les collecteurs d'alimentation, c'est-à-dire reliés à certaines cellules mais pas à d'autres ; dans ce cas ces collecteurs sont reliés en bout d'empilement à plusieurs conduits d'évacuation comme cela a été représenté pour simplifier sur les figures 1 et 2 : conduits C_{OUT-A}, C_{OUT-B}.

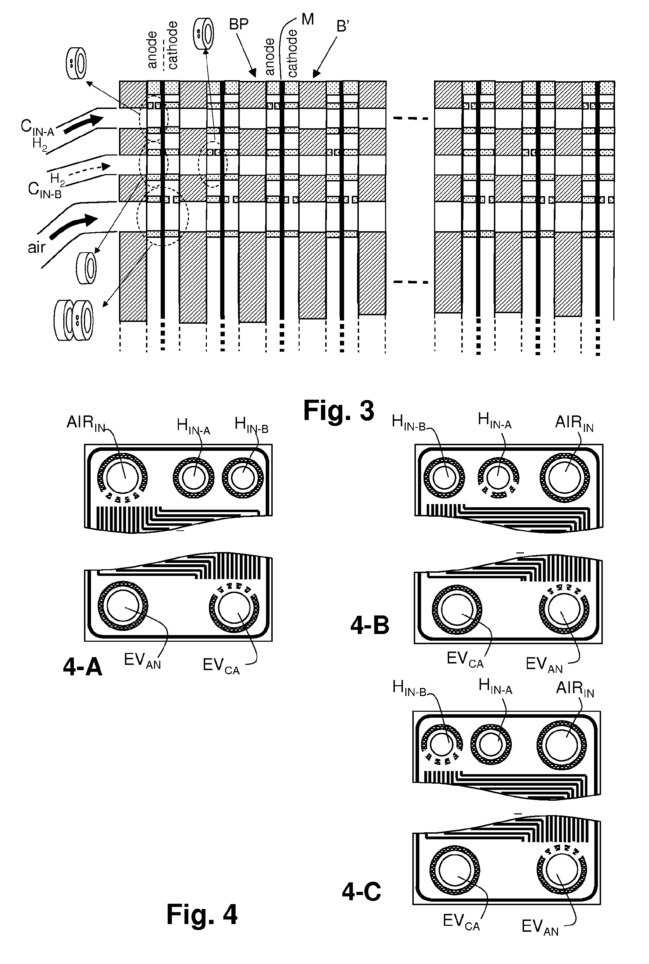

La figure 3 représente une coupe transversale d'un exemple d'empilement de plusieurs cellules d'une pile selon l'invention. Les cellules sont chacune composée d'une membrane électrolytique centrale M, entre deux plaques bipolaires BP et BP'. On considère que l'anode est à gauche de chaque membrane, la cathode à droite. Les plaques sont représentées planes pour simplifier et on n'a représenté que les parties de plaque qui comportent les collecteurs d'alimentation, en air et en hydrogène (en principe à la périphérie des plaques). Les collecteurs d'évacuation ne sont pas représentés. Ils peuvent être constitués comme les collecteurs d'alimentation en air. Les collecteurs de refroidissement éventuellement présents ne sont pas représentés non plus.

Des joints d'étanchéité, notamment des joints périphériques complètement étanches séparent la membrane de chaque plaque.

Dans la représentation de la figure 3, on considère que la communication ou l'absence de communication entre un collecteur d'évacuation et les cellules est réalisée par des joints, par exemple par des joints annulaires, entourant les ouvertures à l'endroit de la cellule et du côté concerné (anode ou cathode). Un joint étanche entourant de manière continue, sans ouverture de communication, ne permet pas la communication. Un joint injecteur comportant des ouvertures de communication permet cette communication.

On comprendra que la communication peut être interdite ou autorisée par d'autres moyens que ces joints annulaires, par exemple des joints de forme complexe, ou des conformations particulières des plaques bipolaires.

Si on considère la figure 3, on voit que le collecteur d'alimentation en hydrogène qui est alimenté par le conduit C_{IN-A} est en communication avec une cellule sur deux du côté anode et jamais en communication du côté cathode. On voit aussi que l'autre collecteur d'alimentation, alimenté par le conduit C_{IN-B} est en communication avec les autres cellules du côté anode et jamais en communication du côté cathode. Le collecteur d'alimentation en air est en communication avec toutes les cellules du côté cathode et jamais du côté anode.

La figure 4 représente trois vues de plaques bipolaires montrant à nouveau cette disposition avec deux collecteurs d'amenée d'hydrogène et une communication de chacun des collecteurs avec une cellule d'un groupe mais pas avec celle de l'autre groupe. Dans cet exemple, on a considéré qu'il y a un collecteur d'alimentation d'hydrogène H_{IN-A} pour les cellules du groupe A et un autre H_{IN-B} pour les cellules du groupe B, un collecteur d'alimentation en air AIR_{IN} pour toutes les cellules, un collecteur d'évacuation des produits du côté anode EV_{AN}, et un collecteur d'évacuation des produits du côté cathode EV_{CA}.

La première vue 4-A montre la face de la plaque bipolaire du côté cathode avec
- une ouverture représentant le collecteur AIR_{IN} et un joint pourvu d'ouvertures de communication ;
- deux ouvertures représentant les collecteurs H_{IN-A} et H_{IN-B} avec des joints dépourvus d'ouvertures donc sans communication possible ;
- une ouverture représentant le collecteur d'évacuation EV_{CA} pour les produits de réaction à la cathode, avec un joint percé d'ouvertures,
- une ouverture représentant le collecteur d'évacuation EV_{AN} pour les produits de réaction à l'anode, avec un joint dépourvu d'ouvertures.

La deuxième vue 4-B représente la face d'une plaque bipolaire du côté anode d'une cellule du groupe GA, avec
- une ouverture représentant le collecteur AIR_{IN} et un joint qui ne comporte aucune ouverture de communication ;
- une ouverture représentant le collecteur H_{IN-A} avec un joint pourvu d'ouvertures de communication ;
- une ouverture représentant le collecteur H_{IN-B} avec un joint qui ne comporte pas d'ouvertures de communication ;
- une ouverture représentant le collecteur d'évacuation EV_{AN} pour les produits de réaction à l'anode, avec un joint percé d'ouvertures,
- et une ouverture représentant le collecteur d'évacuation EV_{CA} pour les produits de réaction à la cathode avec un joint dépourvu d'ouvertures.

La troisième vue 4-C représente la face d'une plaque bipolaire du côté anode d'une cellule du groupe GB, avec
- une ouverture représentant le collecteur AIR_{IN} et un joint qui ne comporte aucune ouverture de communication ;
- une ouverture représentant le collecteur H_{IN-A} avec un joint qui ne comporte pas d'ouvertures de communication ;
- une ouverture représentant le collecteur H_{IN-B} avec un joint pourvu d'ouvertures de communication ;
- une ouverture représentant le collecteur d'évacuation EV_{AN} pour les produits de réaction à l'anode, avec un joint percé d'ouvertures,
- et une ouverture représentant le collecteur d'évacuation EV_{CA} pour les produits de réaction à la cathode avec un joint dépourvu d'ouvertures.

Pour assurer la distribution sélective d'hydrogène dans l'un ou l'autre des collecteurs, on peut minimiser la longueur des conduits secondaires tels que C_{INA} et C_{INB}. On peut en effet ramener dans une plaque terminale de l'empilement les moyens d'aiguillage du gaz. Ces moyens peuvent être des vannes mais aussi, plus simplement, des obturateurs basculants, ou encore des plaques perforées montées à rotation ou déplaçables en translation pour amener une ouverture dans la plaque devant le conduit à alimenter avec un minimum de consommation d'énergie.

## Revendications

1. Pile à combustible produisant de l'énergie électrique par une réaction électrochimique entre au moins deux produits réactifs, la pile comprenant au moins un empilement de cellules composées chacune d'un assemblage d'un électrolyte, d'une anode, et d'une cathode, l'empilement étant pourvu d'un moyen d'approvisionnement pour au moins un des produits réactifs, apte à amener ce produit réactif dans les cellules de l'empilement, et d'un moyen d'évacuation des sous-produits de la réaction, **caractérisée en ce que** :
- les cellules de la pile sont réparties en N groupes (GA, GB), N>1, et le moyen d'approvisionnement du produit réactif comporte un collecteur d'alimentation (H_{IN-A}, H_{IN-B}) respectif d'approvisionnement pour chaque groupe de cellules, ce collecteur étant apte à amener le produit réactif sélectivement aux cellules d'un groupe sans l'amener aux cellules des autres groupes,
- le moyen d'approvisionnement comporte en outre un moyen de commutation sélectif (V_{A}, V_{B}) pour autoriser et interdire le passage du produit réactif vers chacun des collecteurs,
- le moyen d'évacuation comporte au moins un collecteur d'évacuation (EV_{AN}), il est agencé de manière à autoriser la circulation, entre les N groupes de cellules, du produit réactif non consommé par la réaction, et il comporte une vanne de purge (V_{P}),
et les cellules des différents groupes sont empilées de manière imbriquée dans un même empilement, c'est-à-dire qu'une cellule d'un groupe est adjacente à une cellule d'un autre groupe de l'empilement.

2. Pile à combustible selon la revendication 1, **caractérisée en ce que** le collecteur d'évacuation, traversant l'empilement de cellules, communique avec les cellules de tous les groupes.

3. Pile à combustible selon l'une des revendications 1 et 2, **caractérisée en ce que** le moyen d'approvisionnement apporte de l'hydrogène aux collecteurs d'alimentation des N groupes, le collecteur d'un groupe communiquant avec les cellules de ce groupe du côté de l'anode.

4. Pile à combustible selon l'une des revendications 1 à 3, **caractérisée en ce que** le moyen d'approvisionnement apporte de l'oxygène aux collecteurs d'alimentation des N groupes, le collecteur d'un groupe communiquant avec les cellules de ce groupe du côté de la cathode.

5. Procédé d'alimentation d'une pile à combustible, comprenant au moins un empilement de cellules, par au moins un produit réactif, **caractérisé en ce que** l'on alimente sélectivement N groupes de cellules de la pile (N>1) avec le produit réactif selon au moins trois phases,
- une première phase dans laquelle un premier groupe de cellules (GA) est alimenté mais pas un deuxième groupe (GB), le produit réactif non consommé pouvant cependant circuler entre les deux groupes par l'intermédiaire d'au moins un collecteur d'évacuation (EV_{AN}) relié aux cellules des deux groupes ;
- une deuxième phase dans laquelle le deuxième groupe est alimenté mais pas le premier, le produit réactif non consommé pouvant cependant circuler entre les deux groupes par l'intermédiaire du collecteur d'évacuation ;
- une troisième phase dans laquelle les deux groupes sont d'abord alimentés simultanément, puis une vanne de purge (V_{P}) du collecteur d'évacuation est ouverte puis refermée.

6. Procédé selon la revendication 5, **caractérisé en ce que** les cellules des différents groupes sont empilées de manière imbriquée dans un même empilement, c'est-à-dire qu'une cellule d'un groupe est adjacente à une cellule d'un autre groupe de l'empilement.

7. Procédé selon l'une des revendications 5 et 6, **caractérisé en ce que** les deux premières phases sont répétées sur plusieurs alternances successives avant de passer à la troisième phase, après quoi un cycle recommence.

8. Procédé selon l'une des revendications 5 à 7, **caractérisé en ce que** N est supérieur à deux et on alimente soit un seul groupe pendant une phase soit plusieurs groupes, mais pas tous, en modifiant la composition des groupes alimentés pendant une série de phases successives par une permutation progressive des alimentations, puis on effectue une phase de purge comportant une ouverture simultanée de toutes les alimentations suivie immédiatement d'une purge commune par la vanne de purge.

9. Procédé selon la revendication 8, **caractérisé en ce que** la série de phases est répétée plusieurs fois avant la phase de purge.

10. Procédé selon l'une des revendications 5 à 9, **caractérisé en ce que** la pile est une pile à combustible et le produit réactif est de l'hydrogène amené par les collecteurs d'alimentation du côté de l'anode des cellules de chaque groupe.

## Patentansprüche

1. Brennstoffzellen-Batterie zum Erzeugen von elektrischer Energie durch eine elektrochemische Reaktion zwischen wenigstens zwei Reaktionsprodukten, wobei die Batterie wenigstens einen Stapel von Zellen umfasst, die jeweils aus einer Baugruppe aus einem Elektrolyt, einer Anode und einer Kathode zusammengesetzt sind, wobei der Stapel mit einem Mittel zum Bereitstellen wenigstens eines der Reaktionsprodukte, das dieses Reaktionsprodukt in die Zellen des Stapels bringen kann, und einem Mittel zum Ableiten von Nebenprodukten der Reaktion versehen ist, **dadurch gekennzeichnet, dass**:
- die Zellen der Batterie in N Gruppen (GA, GB) unterteilt sind, wobei N>1 ist, und das Mittel zum Bereitstellen des Reaktionsprodukts einen Speisesammler (H_{IN-A}, H_{IN-B}) zum jeweiligen Bereitstellen für jede Gruppe von Zellen umfasst, wobei dieser Sammler das Reaktionsprodukt selektiv zu den Zellen einer Gruppe bringen kann, ohne sie zu den Zellen der anderen Gruppen zu bungen,
- das Bereitstellungsmittel darüber hinaus ein selektives Schaltmittel (V_{A}, V_{B}) umfasst, um die Passage des Reaktionsprodukts zu den einzelnen Sammlern zuzulassen oder zu verhindern,
- das Ableitungsmittel wenigstens einen Ableitungssammler (EV_{AN}), so ausgelegt, dass er die Zirkulation, zwischen den Endgruppen von Zellen, des bei der Reaktion nicht verbrauchten Reaktionsprodukts zulässt, und ein Spülventil (V_{P}) umfasst,
und die Zellen unterschiedlicher Gruppen in einem selben Stapel auf verschachtelte Weise gestapelt sind, d.h. dass sich eine Zelle von einer Gruppe neben einer Zelle einer anderen Gruppe des Stapels befindet.

2. Brennstoffzellen-Batterie nach Anspruch 1, **dadurch gekennzeichnet, dass** der Ableitungssammler beim Durchlaufen des Zellenstapels mit den Zellen aller Gruppen kommuniziert.

3. Brennstoffzellen-Batterie nach einem der Ansprüche 1 und 2, **dadurch gekennzeichnet, dass** das Bereitstellungsmittel Wasserstoff zu den Speisesammlern von N Gruppen führt, wobei der Sammler von einer Gruppe mit den Zellen dieser Gruppe auf der Anodenseite kommuniziert.

4. Brennstoffzellen-Batterie nach einem der Ansprüche 1 bis 3, **dadurch gekennzeichnet, dass** das Bereitstellungsmittel Sauerstoff zu den Speisesammlern von N Gruppen führt, wobei der Kollektor von einer Gruppe mit den Zellen dieser Gruppe auf der Kathodenseite kommuniziert.

5. Verfahren zum Speisen einer Brennstoffzellen-Batterie, die wenigstens einen Stapel von Zellen umfasst, mit wenigstens einem Reaktionsprodukt, **dadurch gekennzeichnet, dass** selektiv N Gruppen von Zellen der Batterie (N>1) mit dem Reaktionsprodukt gemäß wenigstens drei Phasen gespeist werden,
- einer ersten Phase, in der eine erste Gruppe von Zellen (GA) gespeist, aber eine zweite Gruppe (GB) nicht gespeist wird, wobei das nicht verbrauchte Reaktionsprodukt jedoch zwischen den beiden Gruppen mit Hilfe von wenigstens einem Ableitungssammler (EV_{AN}) zirkulieren kann, der mit den Zellen von zwei Gruppen verbunden ist;
- einer zweiten Phase, in der die zweite Gruppe gespeist, die erste Gruppe aber nicht gespeist wird, wobei das nicht verbrauchte Reaktionsprodukt jedoch zwischen den zwei Gruppen mit Hilfe des Ableitungssammlers zirkulieren kann;
- einer dritten Phase, in der die zwei Gruppen zunächst gleichzeitig gespeist werden, dann ein Spülventil (V_{P}) des Ableitungssammlers geöffnet, dann geschlossen wird.

6. Verfahren nach Anspruch 5, **dadurch gekennzeichnet, dass** die Zellen von verschiedenen Gruppen auf verschachtelte Weise in einem selben Stapel gestapelt werden, d.h. dass sich eine Zelle von einer Gruppe neben einer Zelle einer anderen Gruppe des Stapels befindet.

7. Verfahren nach einem der Ansprüche 5 und 6, **dadurch gekennzeichnet, dass** die zwei ersten Phasen in mehreren aufeinander folgenden Wechseln vor dem Passieren zur dritten Phase wiederholt werden, wonach ein Zyklus erneut beginnt.

8. Verfahren nach einem der Ansprüche 5 bis 7, **dadurch gekennzeichnet, dass** N größer als zwei ist und dass entweder eine einzige Gruppe während einer Phase oder mehrere, aber nicht alle Gruppen gespeist werden, indem die Zusammensetzung von gespeisten Gruppen während einer Serie von aufeinander folgenden Phasen durch eine progressive Speiseumschaltung gespeist wird, dann eine Spülphase erfolgt, die aus dem gleichzeitigen Öffnen aller Speisungen, sofort gefolgt von einer gemeinsamen Spülung durch das Spülventil besteht.

9. Verfahren nach Anspruch 8, **dadurch gekennzeichnet, dass** die Serie von Phasen mehrere Male vor der Spülphase wiederholt wird.

10. Verfahren nach einem der Ansprüche 5 bis 9, **dadurch gekennzeichnet, dass** die Batterie eine Brennstoffzellen-Batterie ist und das Reaktionsprodukt Wasserstoff ist, der von den Speisesammlern auf der Anodenseite von Zellen jeder Gruppe geführt wird.

## Claims

1. A fuel cell battery producing electrical power via an electrochemical reaction between at least two reactants, the battery comprising at least one stack of cells each of which is composed of an assembly of an electrolyte, an anode, and a cathode, the stack being provided with a means for supplying at least one of the reactants, this means being able to deliver this reactant to the cells of the stack, and a means for evacuating sub-products of the reaction, **characterized in that**:
- the cells of the battery are divided into N groups (GA, GB), N>1, and the means for supplying the reactant comprises a respective supply manifold (H_{IN-A}, H_{IN-B}) for supplying each group of cells, this manifold being able to deliver the reactant selectively to the cells of a group without delivering it to the cells of the other groups,
- the supplying means furthermore comprises a selective switching means (V_{A}, V_{B}) for permitting and preventing the passage of the reactant to each of the manifolds,
- the evacuating means comprises at least one evacuation manifold (EV_{AN}), it is arranged in order to permit reactant not consumed by the reaction to flow, between the N groups of cells, and it comprises a purge valve (V_{P}),
and the cells of the various groups are stacked in an interleaved way in one and the same stack, which is to say that a cell of one group is adjacent a cell of another group in the stack.

2. The fuel cell battery as claimed in claim 1, **characterized in that** the evacuation manifold, passing through the stack of cells, communicates with the cells of all the groups.

3. The fuel cell battery as claimed in one of claims 1 and 2, **characterized in that** the supplying means supplies hydrogen to the supply manifolds of the N groups, the manifold of a group communicating with the cells of this group from the anode side.

4. The fuel cell battery as claimed in one of claims 1 to 3, **characterized in that** the supplying means supplies oxygen to the supply manifolds of the N groups, the manifold of a group communicating with the cells of this group from the cathode side.

5. A method for supplying a fuel cell battery, comprising at least one stack of cells, with at least one reactant, **characterized in that** N groups of cells of the battery (N>1) are selectively supplied with the reactant in at least three phases,
- a first phase in which a first group of cells (GA) is supplied but not a second group (GB), the unconsumed reactant being able however to flow between the two groups via at least one evacuation manifold (EV_{AN}) connected to the cells of the two groups;
- a second phase in which the second group is supplied but not the first, the unconsumed reactant being able however to flow between the two groups via the evacuation manifold; and
- a third phase in which the two groups are first supplied simultaneously, then a purge valve (V_{P}) of the evacuation manifold is opened then closed.

6. The method as claimed in claim 5, **characterized in that** the cells of the various groups are stacked in an interleaved way in one and the same stack, which is to say that a cell of one group is adjacent a cell of another group in the stack.

7. The method as claimed in one of claims 5 and 6, **characterized in that** the two first phases are repeated in a plurality of successive alternations before the third phase is passed to, after which a cycle restarts.

8. The method as claimed in one of claims 5 to 7, **characterized in that** N is greater than two and either a single group is supplied during a phase or a plurality, but not all, of the groups are supplied by modifying the composition of the groups supplied during a series of successive phases via a gradual permutation of the supplies, then a purge phase is carried out comprising simultaneously opening all the supplies, immediately followed by a common purge via the purge valve.

9. The method as claimed in claim 8, **characterized in that** the series of phases is repeated a plurality of times before the purge phase.

10. The method as claimed in one of claims 5 to 9, **characterized in that** the battery is a fuel cell battery and the reactant is hydrogen delivered by the supply manifolds to the anode side of the cells of each group.
